# EUROPÄISCHE PATENTSCHRIFT

(11) **EP 1 122 217 B1**
(45) Veröffentlichungstag und Bekanntmachung des Hinweises auf die Patenterteilung: **16.11.2005**
(21) Anmeldenummer: 00118721.0
(22) Anmeldetag: 30.08.2000
(51) Int. Cl.: C02F 3/12, B01D 21/00

(54) **Verfahren und Vorrichtung zur mechanischen Schwimmschlammbekämpfung**
Process and apparatus for mechanically controllling floating sludge
Procédé et appareil pour l'élimination mecanique des boues flottantes

(30) Priorität: 01.02.2000 DE 20001795 U
(43) Veröffentlichungstag der Anmeldung: 08.08.2001
(73) Patentinhaber: Li, Zhiqiang, Dr.-Ing., 22527 Hamburg (DE); Harbs, Volker, Dipl.-Ing., 20251 Hamburg (DE); Preussner, Belinda, 22609 Hamburg (DE)
(72) Erfinder: Li, Zhiqiang,Dr.-Ing., 22527 Hamburg (DE); Harbs, Volker, Dipl.-Ing., 20251 Hamburg (DE)
(74) Vertreter: von Raffay, Vincenz

(56) Entgegenhaltungen:
- WO-A-91/00250
- DE-A- 2 324 678
- PATENT ABSTRACTS OF JAPAN vol. 011, no. 096 (C-412), 26. März 1987 (1987-03-26) & JP 61 245898 A (TAKENAKA KOMUTEN CO LTD;OTHERS: 01), 1. November 1986 (1986-11-01)
- PATENT ABSTRACTS OF JAPAN vol. 1995, no. 04, 31. Mai 1995 (1995-05-31) & JP 07 000882 A (SHOJI ITO), 6. Januar 1995 (1995-01-06)
- PATENT ABSTRACTS OF JAPAN vol. 1997, no. 12, 25. Dezember 1997 (1997-12-25) & JP 09 206742 A (II M S:KK;ASAKURA KOGYOSHO:KK), 12. August 1997 (1997-08-12)

## Beschreibung

Die Erfindung betrifft ein Verfahren und eine Vorrichtung zur Entnahme, zum Transport und zur Entgasung von schaumigem Schwimmschlamm in biologischen Abwasserreinigungsanlagen und in Schlammbehandlungsanlagen.

In Abwasser- und Schlammbehandlungsanlagen tritt häufig Schwimmschlamm auf. Dieser kann zu erheblichen Betriebsstörungen führen. Beispielsweise können Schwimmschlammflocken aus den Nachklärbecken einer Abwasserbehandlungsanlage austreten und damit die Ablaufqualität des gereinigten Abwassers verschlechtem. Ebenfalls beispielsweise kann Schwimmschlamm auf der Wasseroberfläche in Faulbehältem zu einem Verstopfen der Gasleitungen führen, so dass eine Gasnutzung nicht mehr möglich ist.
Zur Problemlösung gibt es zur Zeit keine wirksamen Behandlungsanlagen.
Die Schwimmschlammfassung und behandlung stellen in der Praxis bisher ungelöste Probleme dar. Diese beginnen mit der Fassung und Räumung des Schwimmschlammes von den Abwasser- bzw. Schlammoberflächen in den Behandlungsanlagen. Der schaumige Schwimmschlamm staut sich aufgrund seines zähen und steifen Zustandes vor der Eintrittsöffnung bisher üblicher Entnahme- und Räumgeräte und verhindert damit den Zufluss des Schwimmschlammes zur Entnahmeeinheit bzw. zum Behandlungsgerät.
Ein weiteres Problem bei den bisher üblichen Schwimmschlammentnahmegeräten ist der Transport des Schwimmschlammes von der Entnahmeeinheit zur Förder- bzw. Behandlungsanlage. Abwasser bzw. Schlamm fließen unterhalb des schaumigen Schwimmschlammes ab und der Schwimmschlamm staut in der Zuflussstrecke zur Förder- bzw. Behandlungsanlage.
Weitere kritische Punkte sind Pumpenvorlagebehälter in denen sich der aufschwimmende Schwimmschlamm wieder an der Wasseroberfläche aufbaut und die beim Abpumpen freigesetzten Gase im Pumpengehäuse, die zu Reduzierungen und Unterbrechung des Förderstromes führen.
Ernste Probleme treten auf, wenn schaumiger Schwimmschlamm in die Nachklärbecken von Kläranlagen gelangt. Durch abtreibende Schwimmschlammflocken wird die Reinigungsleistung der Kläranlage durch Verschlechterung der Ablaufwerte beeinträchtigt.
Hierzu hat J. Müller in der Zeitschrift "Wasser Abwasser Praxis" (1999, 3) einen Artikel über die mechanische Zerkleinerung von Bläh- und Schwimmschlämmen veröffentlicht. Im Labormaßstab wurden die verschiedensten Möglichkeiten der mechanischen Schlammflockenzerstörung untersucht. Die im labortechnischen Maßstab geführten Untersuchungen zeigten einen viel zu hohen Energieaufwand für eine Umsetzung in den technisch-wirtschaftlichen Maßstab.

Die der Erfindung zugrundeliegende Aufgabe besteht im wesentlichen darin, die im Stand der Wissenschaft vorhandenen Probleme technisch und wirtschaftlich zu bewältigen und ein Verfahren und eine Vorrichtung zu schaffen, die mit geringem Energieaufwand und ohne Zusatz von Ballaststoffen oder chemischen/biologischen Hilfsmitteln Schwimmschlamm transportierbar und sedimentierbar macht und den Aufstau des Schwimmschlammes vor den Eintrittsöffnungen der Schwimmschlammabzugseinheit vermeidet

Diese Aufgabe wird grundsätzlich durch die Merkmale des Anspruches 1 gelöst, wobei der Schwimmschlammstau vor der Eintrittsöffnung zur Entnahmeeinheit durch Wasserstrahlung verhindert wird, durch Besprühung mit Wasser / Schlamm ein vorentgastes Gemisch erzeugt wird. Das vorentgaste Gemisch ist nun transportierbar. Das Schwimmschlammgemisch wird in einem Behandlungsbehälter mit einem Scherkraft erzeugenden Gerät feinentgast und damit sedimentierbar gemacht.

In dem Behandlungsbehälter wird der Schwimmschlamm durch Einwirkung von Scherkräften mit erfindungsgemäßer Stärke aufgelöst und die in den Schlammflocken und fadenförmigen Mikroorganismen eingeschlossenen Fein- und Mikroblasen werden freigesetzt. Die Fein- und Mikroblasen bestehen aus Gasen, wie zum Beispiel Stickstoff (N₂), Kohlendioxid (CO₂) oder Methan (CH₄).

In Sinne der Erfindung können die zur Feinentgasung benötigten Scherkräfte beispielsweise durch mechanische Rührer, Dispergiergeräte usw. erzeugt werden.

Die Entnahme aus dem Belebungsbecken /Schlammbehandlungsbehälter erfolgt gemäß einer Ausführungsform des erfindungsgemäßen Verfahrens durch Absaugung des Schwimmschlammes von der Wasseroberfläche, und der Transport wird durch eine der Absaugung nachgeschaltete Pumpe im Pumpenvorlagebehälter durchgeführt, wobei eine weitere Besprühung zur Grobentgasung im Pumpenvorlagebehälter stattfindet, die Pumpe das vorentgaste Schlammgemisch in den Behandlungsbehälter zur Feinentgasung fördert.

Im folgenden wird die Erfindung unter Hinweis auf die Zeichnung anhand verschiedener Ausführungsbeispiele näher erläutert.

Es zeigt:
- Fig. 1: ein Schwimmschlammfassungs- und -behandlungssystem mit einer Skimmrinne als Entnahmeeinheit, Wasserstrahl- und Wasserbesprühungs-elementen, einer Fördereinrichtung mit Wasserbesprühung und einem Behandlungsbehälter mit Dispergiergerät, im Schnitt.
- Fig. 2: einen Schwimmschlammbehandlungsbehälter mit Dispergiergerät zur Feinentgasung des Schwimmschlammes, im Schnitt.
- Fig. 3: ein Schwimmschlammfassungs- und -behandlungskompaktsystem in einen Abwasserreinigungsbecken eingetaucht, mit einem höhenverstellbaren Behandlungsbehälter mit Fördereinrichtung, Wasserstrahlung, -besprühung und Dispergiergerät, im Schnitt.
- Fig. 4: ein Schwimmschlammfassungs- und -behandlungskompaktsystem in ein Abwasserreinigungsbecken eingetaucht, mit einem höhenverstellbaren Behandlungsbehälter, einer im Ablaufrohr eingebauten Förderpumpe, Wasserstrahlung, -besprühung und mit schräg installiertem Dispergiergerät, im Schnitt.
- Fig. 5: eine Schwimmschlammfassungs- und -behandlungskompaktsystem wie Figur 3, jedoch in schwimmender Ausführung mit Schwimmkörper und Sicherungseinrichtungen, in der Draufsicht.

Die Schwimmschlammfassungseinheit wie Skimmrinne, Sauger, Paddelwerk usw. sollen am Entstehungsort des Schwimmschlammes eingesetzt werden, der Behandlungsbehälter kann jedoch inner- oder außerhalb des Abwasser- oder Schlammbehandlungsbehälters aufgesellt werden kann.
Der bevorzugte Fassungsort bei der Abwasserreinigung ist das Belebungsbecken, wo der Schwimmschlamm entsteht. Um den Schwimmschlamm nicht ins nachfolgende Nachklärbecken abfliessen zu lassen, ist für die Fassung des Schwimmschlammes zweckmäßiger Weise eine Tauchwand im Ablaufbereich des Belebungsbeckens anzuordnen.
Da der erfindungsgemäß behandelte Schwimmschlamm absetzfähig ist, kann er in der Regel direkt in den Zulauf des Nachklärbeckens eingeleitet werden.
Bei der Schlammbehandlung kann die Zulaufmenge zum Faulbehälter direkt in einem Behandlungsbehälter feinentgast werden oder der Schaum wird von der Schlammoberfläche im Faulbehälter oder Eindicker entnommen und dann behandelt.

Um genügend Scherwirkung in den Schwimmschlamm einzubringen, muss eine gewisse Aufenthaltszeit im Behandlungsbehälter gewährleistet werden, beispielweise 1 Sekunde bis 90 Sekunden, insbesondere 5 Sekunden bis 60 Sekunden, vorzugsweise 10 Sekunden bis 45 Sekunden.
Der spezifische, mechanische Energieeintrag beträgt erfindungsgemäß je nach der Größe des Behandlungsbehälters in bezug auf das behandelte Abwasserschlammgemisch zwischen 0,01 kJ/kg bis 0,7 kJ/kg, insbesondere 0,05 kJ/kg bis 0,6 kJ/kg, vorzugsweise 0,10 kJ/kg bis 0,5 kJ/kg.
Um die Feinentgasung vornehmen zu können, muss der Schwimmschlamm erfindungsgemäß mit Wasser / Schlamm auf 0,1% bis 5%, insbesondere 0,3% bis 4% und vorzugsweise 0,5% bis 3% Trockensubstanzgehalt verdünnt werden.

Im Anwendungsfall mit einen außenstehenden Behandlungsbehälter ist eine Fassungs-und Fördereinrichtung im Abwasserreinigungsbecken oder Schlammbehandlungsbecken notwendig. Diese kann beispielsweise eine Skimmrinne oder ein Paddelwerk in Kombination mit einer Pumpe bzw. eine von Schwimmkörpern getragene Saugpumpe sein. Um die Schwimmschlammfassung zu ermöglichen, sind Wasserstrahlen vor den Eintrittsöffnungen und eine Wasserbesprühung, mechanische Rührung oder Grobbelüftung in der Transport- oder Zuflußstrecke zum Behandlungsbehälter erforderlich.

Im Anwendungsfall, dass der Behandlungsbehälter im Wasser eingetaucht und von Schwimmkörper getragen bzw. durch eine höhenverstellbare Halterung in Position gehalten wird, fliesst der Schwimmschlamm über eine Überfallwehrkante in den Behandlungsbehälter. Im Behandlungsbehälter wird der Schwimmschlamm feinentgast und dann durch eine Pumpe aus dem Behandlungsbehälter ins Abwasserreinigungs-oder Schlammbehandlungsbecken gefördert. Wenn der eingesaugte Schwimmschlamm einen zu hohen Trockensubstanzgehalt hat, ist eine Zugabe von dünnerem Schlamm, beispielsweise Belebtschlamm aus dem Belebungsbecken, Faulschlamm aus dem Faulbehälter oder Wasser sinnvoll, um einen guten Feinentgasungseffekt zu erzielen. Das Scherkrafterzeugungsgerät kann kontinuierlich oder diskontinuierlich betrieben werden. Dies gilt auch für die Entnahme-, Grobentgasungs- und Fördereinrichtungen.

Die Zugabe von Chemikalien, z.b. von Entschäumem oder Tensiden kann die Oberflächeneigenschaften der Mikroorganismen positiv beeinflussen, so dass die in der Netz- und Geflechtkonstruktion der Mikroben eingeschlossenen Fein- und Mikroblasen leichter freigegeben werden. Eine Dosiereinrichtung ist in diesem Fall notwendig.

Zur erfindungsgemäßen Behandlungsanlage gibt es zur Zeit keine vergleichbare Systeme oder Vorrichtungen. Dieses mechanische Verfahren und die entsprechende Vorrichtung zeigen erhebliche Vorteile gegenüber chemischen Verfahren z.B. Zudosierung von Aluminiumsalzen, Schichtensilikaten, Kalk sowie organischen Zusatzstoffen, die meistens mit einer großen zusätzlichen Kosten- und Umweltbelastung verbunden sind, beispielsweise einer Aufsalzung des Abwassers und damit des nachfolgenden Gewässers bzw. mit einer erheblichen Erhöhung der zu beseitigenden Reststoffmenge.

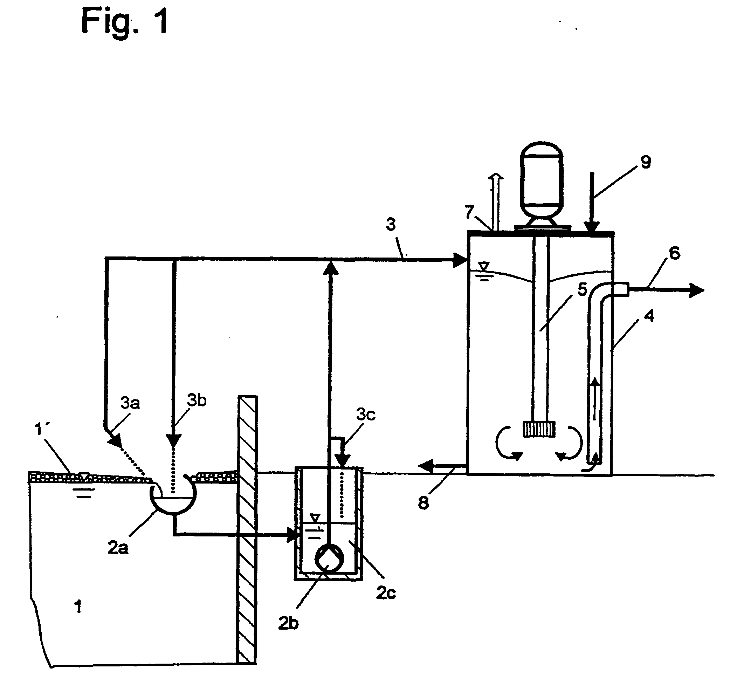

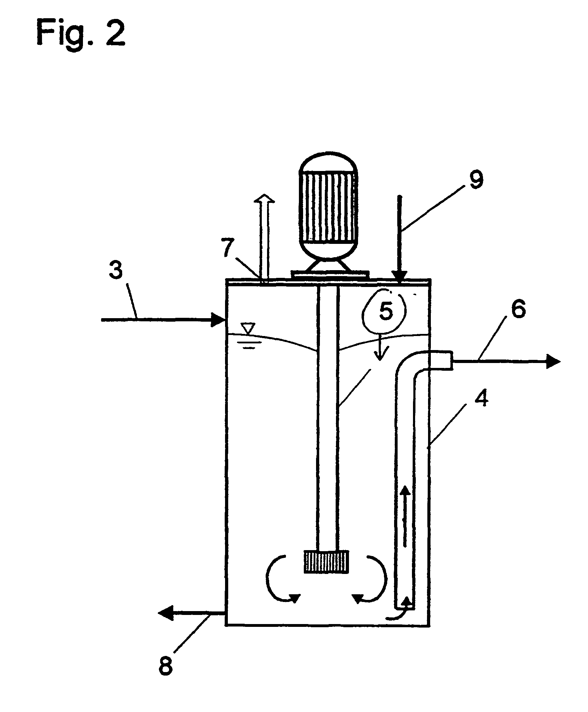

Das Prinzip des erfinderischen Schwimmschlammfassungs- und -behandlungssystems zeigt die **Figur 1**.
Der Schwimmschlamm des Belebungsbeckens 1 wird mit einer Skimmrinne 2a gesammelt und dem Pumpenvorlagebehälter 2c zugeleitet Die dortige Pumpe 2b fördert das Schlammgemisch durch eine Rohrleitung 3 in den Behandlungsbehälter 4. Nach der Feinentgasung wird das absetzfähige Schlammgemisch durch den Ablauf 6 zur Nachklärung geleitet.
Um eine Stau- und Brückenbildung des Schwimmschlammes vor den Eintrittsöffnungen der Skimmrinne zu vermeiden, sind Wasserstrahlungselemente 3a angeordnet. Die Wasserbesprühungselemente 3b dienen der Grobentgasung des Schwimmschlammes, um diesen transportfähig zu machen. Um gegebenenfalls eine Phasentrennung des Schwimmschlammes von dem normalen Belebtschlamm zu vermeiden, ist im Pumpenvorlagebehälter 2c eine weitere Besprühung 3c mit Wasser / Schlamm angeordnet
Die Feinentgasung des Schwimmschlammes wird im Behandlungsbehälter 4, siehe auch **Figur 2**, durchgeführt. Hierzu ist ein Dispergiergerät 5 im Behandlungsbehälter 4 installiert. Der Schwimmschlamm wird durch das Dispergiergerät 5 behandelt, um seine Netz- und Geflechtkonstruktionen, die aus fadenförmigen Mikroorganismen, wie zum Beispiel Microthrix parvicella und Schlammflocken bestehen, aufzulösen. Dadurch werden die in dieser Netz- und Geflechtkonstruktion eingeschlossenen Fein- und Mikroblasen freigegeben. Das freigewordene Gas wird durch die Entlüftungsöffnung 7 aus dem Behälter 4 abgeleitet. Im Bedarfsfalle kann eine Dosierung 9 von Chemikalien oder Naturprodukten erfolgen.
Der behandelte Schwimmschlamm wird durch das Ablaufrohr 6 in den Ablauf des Belebungsbeckens bzw. in den Zulauf des Nachklärbeckens eingeleitet. Hier vermischt er sich mit dem normalen Belebtschlamm und sedimentiert dann im Nachklärbecken. Für den Reparatur- und Wartungsfall ist der Behandlungsbehälter 4 mit einem Entleerungsrohr 8 versehen.

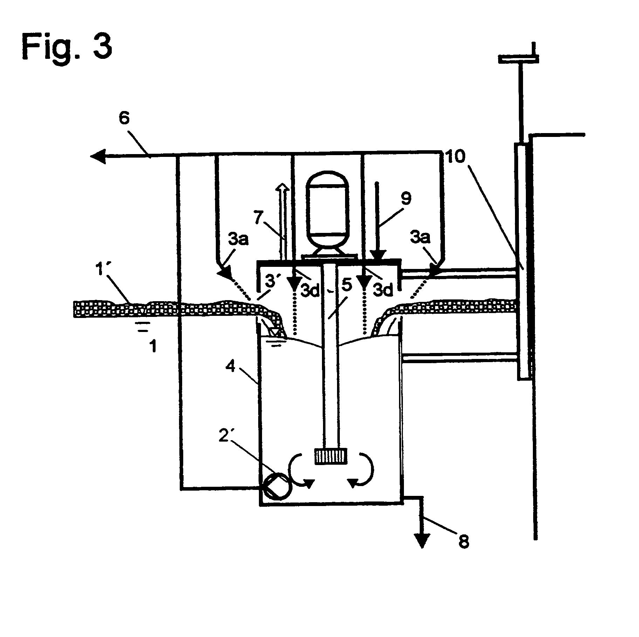

Bei einem im Becken eingetauchten Schwimmschlammerfassungs- und - behandlungskompaktsystem, **Figur 3**, wird beispielsweise der Behandlungsbehälter 4 innerhalb des Belebungsbeckens installiert. Der Schwimmschlamm 1' gelangt durch die Wehröffnung 3' in den Behandlungsbehälter 4. Das Dispergiergerät 5 löst die Netz- und Geflechtstruktur der Mikroorganismen in den Schlammflocken auf, dass die Fein- und Mikroblasen sich vom Schlamm trennen. Das freigesetzte Gas entweicht durch die Entlüftungsöffnung 7. Der feinentgaste Schlamm wird durch eine Förderpumpe 2' in den Ablauf des Belebungsbeckens bzw. in den Zulauf des Nachklärbeckens eingeleitet. Die Positionierung des Behandlungsbehälters 4 wird durch eine höhenverstellbare Halterung 10 an der Beckenwand vorgenommen. Dadurch kann die Zulaufwehrhöhe der Öffnungen 3' an die Schwimmschlammschicht angepasst werden. Vor der Eintrittswehröffnung 3' des Behandlungsbehälters wird ebenfalls eine Wasserstrahlung 3a zur Vermeidung der Schwimmschlammgewölbebildung angeordnet. Um eine Phasentrennung im Behandlungsbehälter zu verhindern, wird eine Besprühung 3d vorgesehen. Im Bedarfsfalle kann eine Dosierung 9 von Chemikalien oder Naturprodukten erfolgen.

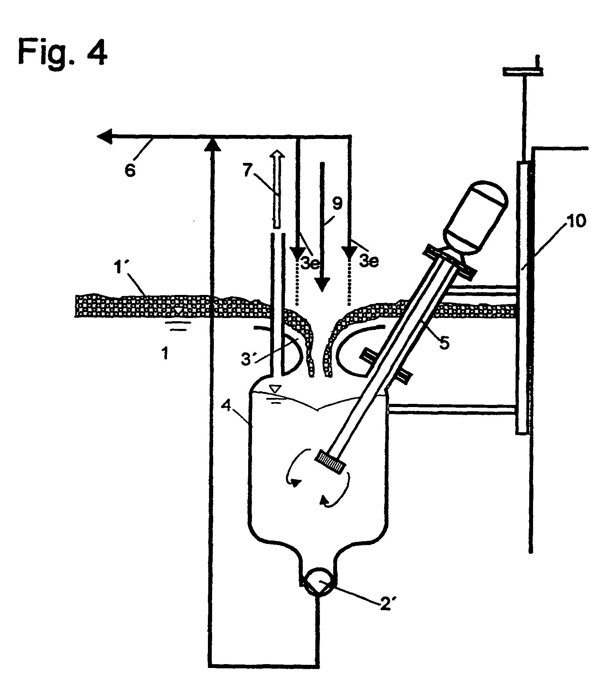

Eine Variante zu dem im Belebungsbecken eingetauchten Schwimmschlammfassungs-und -behandlungskompaktsystem ist der **Figur 4** zu entnehmen. Bei dieser Variante ist die Zulaufwehröffnung 3' in den Deckel des Behandlungsbehälter 4 integriert. Der Schwimmschlamm fließt durch die Zulauföffnung 3' in den Behandlungsbehälter 4. Das in diesem Fall zur besseren Durchmischung in dem Behälter schräg angeordnete Dispergiergerät 5 behandelt den Schwimmschlamm so weit, dass die Fein- und Mikroblasen sich von Schlamm trennen. Der feinentgaste Schlamm kann durch eine Fördereinrichtung 2' in den Ablauf des Belebungsbeckens bzw. in den Zulauf des Nachklärbeckens geführt werden. Der eingetauchte Behandlungsbehälter kann mit einer zusätzlichen Entlüftungseinrichtung 7 für das freigewordene Gas ausgestattet werden. Um eine Stau- und Brückenbildung des Schwimmschlammes vor der Eintrittsöffnung zu vermeiden und um eine gleichzeitige Grobentgasung zu erzielen, ist eine Wasserstrahlungs- und Besprühungseinrichtung 3e angeordnet.

Die Positionierung der gesamten Vorrichtung wird z.b. durch eine an der Beckenwand des Abwasserreinigungsbeckens befestigte, höhenverstellbare Halterung 10 vorgenommen. Im Bedarfsfall kann eine Dosierung 9 von Chemikalien oder Naturprodukten erfolgen.

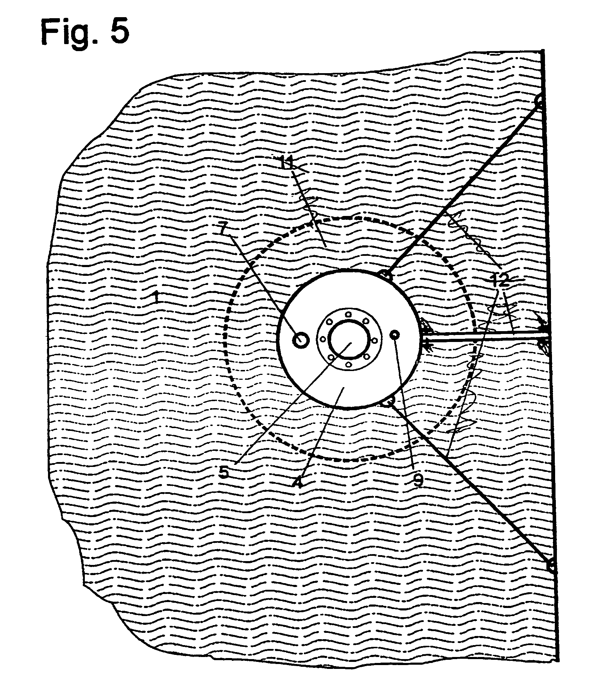

In **Figur 5** ist ein SChwimmschlammfassungs- und - behandlungskompaktsystem wie in **Figur 3** gezeigt, jedoch in schwimmender Ausführung, in der Draufsicht.

Für die Vermeidung der Stau- und Brückenbildung des Schwimmschlammes vor den Eintrittsöffnungen der Fassungseinrichtungen oder Behandlungsbehälter können anstelle der Wasserstrahleinrichtungen auch mechanische oder pneumatische Einheiten, wie zum Beispiel Paddelwerke, Räumgeräte oder Druckluftstrahlung bzw. Druckluftgrobbelüftung eingesetzt werden.
Statt Besprühung des Schwimmschlammes zur Grobentgasung können auch Grobbelüftung oder mechanische Rührung eingesetzt werden.

## Patentansprüche

1. Verfahren zur mechanischen Schwimmschlammbekämpfung auf biologischen Abwasserreinigungsanlagen **gekennzeichnet durch** folgende Verfahrensschritte:
a. Entnahme des Schwimmschlammes in einem Belebungsbecken slash Schlammbehandlungsbehälter (1) und Besprühen mit Wasser / Schlamm zur Verhinderung und Beseitigung von Stau- und Brückenbildung des Schwimmschlammes im Entnahmebereich.
b. Abtransport des Schwimmschlammes aus dem Belebungsbecken Schlammbehandlungsbehälter (1) unter gleichzeitiger Besprühung zur Grobentgasung.
c. Einleitung des Schwimmschlammes in einem Behandlungsbehälter (4), in dem eine Feinentgasung **durch** Scherkrafteintrag mit einem spezifischen Energieeintrag von 0,01 kJ/kg bis 0,7 kJ/kg, insbesondere 0,05 kJ/kg bis 0,6 kJ/kg, vorzugweise 0,10 kJ/kg bis 0,5 kJ/kg, über einem Zeitraum von 1s bis 20 s, insbesondere 5 s bis 60 s, vorzugweise 10 s bis 45 s, durchgeführt wird, worduch die Netz- und Geflechtstruktur der Mikroorganismen in den Schlammflocken des Schwimmschlammes aufgelöst und die in der Schlammflocke enthaltenen Fein- und Mikroblasen freigesetzt werden.

2. Verfahren nach Anspruch 1, **dadurch gekennzeichnet, dass** die Entnahme aus dem Belebungsbecken / Schlammbehandlungsbehälter (1) durch Absaugung des Schwimmschlammes von der Wasseroberfläche erfolgt und dass der Transport durch eine der Absaugung nachgeschaltete Pumpe (2b) im Pumpenvotlagebehälter (2c) durchgeführt wird, wobei eine weitere Besprühung zur Grobentgasung im Pumpenvorlagebehälter (2a) stattfindet, die Pumpe (2b) das vorentgaste Schlammgemisch in den Behandlungsbehälter (4) zur Feinentgasung fördert.

3. Vorrichtung zur Durchführung des Verfahrens nach Anspruch 1 und 2 **dadurch gekennzeichnet, dass** die Schwimmschlammfassungs- und -behandlungsanlage (Fig. 1) mit mindestens einer Schwimmschlammentnahmeeinheit (2a), einer Besprühung (3a) zur Verhinderung und Beseitigung von Stau- und Brückenbildung vor der Eintrittsöffnung der Entnahmeeinheit, mit einer Besprühung (3b) zur Grobentgasung des Schwimmschlammes in der Entnahmeeinheit (2a) und der Transportstrecke, einer Schwimmschlammfördereinrichtung (2b) und einem Behandlungsbehälter (4) zur Feinentgasung, der mindestens eine Zulauföffnung (3), ein Scherkraftgerät (5), eine Ablauf-und eine Entgasungsöffnung (7) enthält, versehen ist.

4. Vorrichtung zur Durchführung des Verfahrens nach Anspruch 1 und 2 **dadurch gekennzeichnet, dass** die Schwimmschlammfassungs- und -behandlungsanlage (Fig. 3) mit mindestens einer Besprühung (3a) zur Verhinderung und Beseitigung von Stau- und Brückenbildung vor der Eintrittsöffnung, eine Vorrichtung zur Grobentgasung (3d) des Schwimmschlammes im Behandlungsbehälter (4) und einem Behandlungsbehälter (4), der ein Scherkraft erzeugendes Gerät (5), eine Ablauffördereinrichtung (2'), eine Entgasungsöffnung (7) enthält und mit einer höhenverstellbaren Halterung (10) für den Behandlungsbehälter (4) versehen ist.

5. Vorrichtung zur Schwimmschlammbekämpfung nach einem der Ansprüche 3 oder 4 **dadurch gekennzeichnet, dass** als Scherkraft erzeugendes Gerät (5), ein Dispergiergerät, ein schnell laufendes Rührgerät, ein Homogenisator oder ein Ultraschallgerät, eingesetzt wird.

6. Vorrichtung zur Schwimmschlammbekämpfung nach einem der Ansprüche 3 bis 5 **dadurch gekennzeichnet, dass** eine Dosiereinrichtung (9) für Chemikalien und/oder Naturprodukte vorgesehen ist.

7. Vorrichtung zur Schwimmschlammbekämpfung nach einem der Ansprüche 3 bis 6 **dadurch gekennzeichnet, dass** das Scherkraft erzeugende Gerät in einer Pumpe als Förder- und Scherkraftelement eingesetzt und der Behandlungsbehälter in das Pumpengehäuse integriert ist

8. Vorrichtung zur Schwimmschlammbekämpfung nach einem der Ansprüche 3 bis 7 **dadurch gekennzeichnet, dass** die Fördereinrichtung (2') innerhalb des Behandlungsbehälters (4), im Ablaufrohr des Behandlungsbehälters (4) oder außerhalb des Behandlungsbehälters (4), angeordnet ist.

9. Vorrichtung zur Schwimmschlammbekämpfung nach einem der Ansprüche 3 bis 8 **dadurch gekennzeichnet, dass** mehrere Behandlungsbehälter / -becken (4) mit gleichen und verschiedenen Schergeräten (5), beispielsweise Dispergiergeräten, Rührgeräten, Ultraschallsonden und/oder Homogenisatoren gekoppelt eingesetzt werden.

10. Vorrichtung zur Schwimmschlammbekämpfung nach einem der Ansprüche 3 bis 9 **dadurch gekennzeichnet, dass** die Fassungseinrichtung (2a) und der Behandlungsbehälter (4) getrennt eingesetzt werden.

## Claims

1. Method for mechanical floating sludge control in biological waste water purification plants, **characterized by** the following method steps:
a. removal of the floating sludge in an aeration tank/sludge treatment container (1) and spraying with water/sludge for preventing and eliminating accumulations and bridging of the floating sludge in the removal area,
b. conveying away of the floating sludge from the aeration tank/sludge treatment container (1), accompanied by simultaneous spraying for coarse degassing,
c. introduction of the floating sludge into a treatment container (4) where a fine degassing is carried out by shear force introduction with a specific energy introduction of 0.01 to 0.07 kJ/kg, particularly 0.05 to 0.6 kJ/kg, especially 0.10 to 0.5 kJ/kg over a time period 1 to 90 s, particularly 5 to 60 s, especially 10 to 45 s, so that the cellular and network structure of the microorganisms in the sludge flocs of the floating sludge is broken up and the small bubbles and microbubbles in the sludge flocs are released.

2. Method according to claim 1, **characterized in that** the removal from the aeration tank/sludge treatment container (1) takes place by sucking off the floating sludge from the water surface and that conveying takes place by a suction-following pump (2b) in the pump receiving container (2c), a further spraying for coarse degassing taking place in the pump receiving container (2c), the pump delivering the predegassed sludge mixture to the treatment container (4) for fine degassing.

3. Apparatus for performing the method according to claim 1 and 2, **characterized in that** the floating sludge reception and treatment plant (fig. 1) is provided with at least one floating sludge removal unit (2a), a spraying means (3a) for preventing and eliminating accumulations and bridging upstream of the inlet of the removal unit, spraying means (3b) for coarse degassing of the floating sludge in the removal unit (2a) and the conveying section, a floating sludge delivery device (2b) and a treatment container (4) for fine degassing having at least one feed opening (3), a shear force device (5) and a draining and degassing opening (7).

4. Apparatus for performing the method according to claims 1 and 2, **characterized in that** the floating sludge reception and treatment plant (fig. 3) is provided with at least one spraying means (3a) for preventing and eliminating accumulations and bridging upstream of the inlet opening, a device for the coarse degassing (3d) of the floating sludge in the treatment container (4) and a treatment container (4) containing a shear force-producing device (5), a drain device (2'), a degassing opening (7) and having a vertically adjustable holder for the treatment container (4).

5. Apparatus for floating sludge control according to one of the claims 3 or 4, **characterized in that** the shear force-producing device (5) is a dispersing device, a high speed stirrer, a homogenizer or an ultrasonic device.

6. Apparatus for floating sludge control according to one of the claims 3 to 5, **characterized in that** there is a dosing device (9) for chemicals and/or natural products.

7. Apparatus for floating sludge control according to one of the claims 3 to 6, **characterized in that** the shear force-producing device is used in a pump as a delivery and shear force element and the treatment container is integrated into the pump housing.

8. Apparatus for floating sludge control according to one of the claims 3 to 7, **characterized in that** the feed device (2') is located within the treatment container (4), in the drain pipe of the treatment container (4) or outside the treatment container (4).

9. Apparatus for floating sludge control according to one of the claims 3 to 8, **characterized in that** use is made of several treatment containers/tanks (4) coupled with identical and different shear force devices (5), e.g. dispersing devices, stirrers, ultrasonic probes and/or homogenizers.

10. Apparatus for floating sludge control according to one of the claims 3 to 9, **characterized in that** the receiving device (2a) and treatment container (4) are used separately.

## Revendications

1. Procédé destiné à l'élimination mécanique de boues flottantes sur des installations d'épuration biologique d'eaux résiduaires, **caractérisé par** les étapes de procédé suivantes :
a. Prélèvement des boues flottantes dans un bassin à boues activées/un réservoir de traitement des boues (1) et pulvérisation d'eau/de boue en vue d'empêcher et d'éliminer la formation d'engorgements et la formation de pontages des boues flottantes dans la zone de prélèvement.
b. Evacuation des boues flottantes hors du bassin à boues activées/du réservoir de traitement des boues (1) avec pulvérisation simultanée en vue du dégazage grossier.
c. Déversement des boues flottantes dans un réservoir de traitement (4), dans lequel un dégazage précis est réalisé par apport d'une force de cisaillement avec un apport spécifique compris entre 0,01 kJ/kg et 0,7 kJ/kg, en particulier entre 0,05 kJ/kg et 0,6 kJ/kg, de préférence entre 0,10 kJ/kg et 0,5 kJ/kg, sur une période comprise entre 1 s et 90 s, en particulier entre 5 s et 60 s, de préférence entre 10 s et 45 s, ce qui permet de dissoudre la structure en réseau et en treillis des micro-organismes dans le floculat de boue des boues flottantes et de libérer les bulles fines et les micro-bulles contenues dans le floculat de boue.

2. Procédé selon la revendication 1, **caractérisé en ce que** le prélèvement hors du bassin à boues activées/du réservoir de traitement des boues (1) s'effectue par aspiration des boues flottantes de la surface de l'eau, et **en ce que** le transport est réalisé grâce à une pompe (2b) branchée en aval de l'aspiration dans le réservoir présentant la pompe (2c), une nouvelle pulvérisation en vue du dégazage grossier ayant lieu dans le réservoir présentant la pompe (2c), la pompe (2b) refoulant le mélange de boue prédégazé dans le réservoir de traitement (4) en vue du dégazage précis.

3. Dispositif destiné à la mise en oeuvre du procédé selon les revendications 1 et 2, **caractérisé en ce que** l'installation de captage et de traitement des boues flottantes (figure 1) est munie d'au moins une unité de prélèvement des boues flottantes (2a), d'une pulvérisation (3a) destinée à empêcher et à éliminer la formation d'engorgements et la formation de pontages avant l'orifice d'admission de l'unité de prélèvement, d'une pulvérisation (3b) destinée au dégazage grossier des boues flottantes dans l'unité de prélèvement (2a) et dans la voie de transport, d'un dispositif de transport des boues flottantes (2b) et d'un réservoir de traitement (4) destiné au dégazage précis, qui comporte au moins un orifice d'alimentation (3), un appareil de cisaillement (5), un orifice d'évacuation et un orifice de dégazage (7).

4. Dispositif destiné à la mise en oeuvre du procédé selon les revendications 1 et 2, **caractérisé en ce que** l'installation de captage et de traitement des boues flottantes (figure 3) est munie d'au moins une pulvérisation (3a) destinée à empêcher et à éliminer la formation d'engorgements et la formation de pontages avant l'orifice d'admission, d'un dispositif destiné au dégazage grossier (3d) des boues flottantes dans le réservoir de traitement (4) et d'un réservoir de traitement (4), qui comporte un appareil générant une force de cisaillement (5), un dispositif de transport d'évacuation (2'), un orifice de dégazage (7), et d'un support réglable en hauteur (10) pour le réservoir de traitement (4).

5. Dispositif destiné à l'élimination de boues flottantes selon l'une des revendications 3 et 4, **caractérisé en ce qu'**en tant qu'appareil générant une force de cisaillement (5) est employé un disperseur, un agitateur à grande vitesse, un homogénéisateur ou un appareil à ultrasons.

6. Dispositif destiné à l'élimination de boues flottantes selon l'une quelconque des revendications 3 à 5, **caractérisé en ce qu'**un dispositif de dosage (9) est prévu pour des produits chimiques et/ou des produits naturels.

7. Dispositif destiné à l'élimination de boues flottantes selon l'une quelconque des revendications 3 à 6, **caractérisé en ce que** l'appareil générant une force de cisaillement est employé dans une pompe sous forme d'élément de transport et de cisaillement et le réservoir de traitement est intégré dans le corps de pompe.

8. Dispositif destiné à l'élimination de boues flottantes selon l'une quelconque des revendications 3 à 7, **caractérisé en ce que** le dispositif de transport (2') est disposé à l'intérieur du réservoir de traitement (4), dans le tuyau de décharge du réservoir de traitement (4) ou à l'extérieur du réservoir de traitement (4).

9. Dispositif destiné à l'élimination de boues flottantes selon l'une des revendications 3 à 8, **caractérisé en ce que** plusieurs réservoirs/bassins de traitement (4) sont employés accouplés avec des appareils de cisaillement (5) identiques et différents, par exemple des disperseurs, des agitateurs, des sondes à ultrasons et/ou des homogénéisateurs.

10. Dispositif destiné à l'élimination de boues flottantes selon l'une des revendications 3 à 9, **caractérisé en ce que** le dispositif de captage (2a) et le réservoir de traitement (4) sont employés séparés.
